# EUROPÄISCHE PATENTANMELDUNG

(11) **EP 1 557 082 A1**
(43) Veröffentlichungstag der Anmeldung: **27.07.2005**
(21) Anmeldenummer: 04001512.5
(22) Anmeldetag: 24.01.2004
(51) Int. Cl.: A01K 1/01

(54) **Einrichtung und Verfahren zur Reinigung von Ställen**

(71) Anmelder: Rudolf Hörmann GmbH & Co. KG, Allgäuer Stallbau, 86807 Buchloe (DE)
(72) Erfinder: Idlhammer, Christian, 3353 Seitenstetten (AT)
(74) Vertreter: Kindermann, Manfred

(57) **Zusammenfassung**

Eine Reinigungseinrichtung in Ställen weist einen parallel zu den Standplätzen der Tiere verlaufenden Kotgang und einen Räumschieber auf, der durch Antriebe (21,20) über einen Seilzug entlang des Kotganges bewegt wird. Es sind eine Einrichtung (60) zur Anzeige der Position des Räumschiebers entlang seiner Bewegungsbahn und in jedem der Antriebe (21,20) ein Drehmomentsensor (50) vorgesehen, der zur jeweiligen Postion des Räumschiebers das am Antrieb wirksame Belastungsdrehmoment feststellt. Eine Steuereinrichtung (70) mit einem Computer (71) speichert eine wegabhängige Drehmomentenkurve (81) und vergleicht die gemessenen Drehmomentsignale (89) mit der Drehmomentenkurve (81). Die Steuereinrichtung bewirkt ein Abschalten des Antriebs, wenn das Drehmomentsignal einen von der Drehmomentenkurve abweichenden Spitzenwert (91) anzeigt, der einen voreingestellten Schwellwert überschreitet.

## Beschreibung

### Bereich der Erfindung

Die Erfindung betrifft eine Reinigungseinrichtung für Ställe, insbesondere Rinderställe, mit einem Räumschieber, der über einen Seilzug entlang eines Kotgangs bewegt wird. Die Erfindung betrifft auch ein Verfahren zur Reinigung von Ställen.

### Stand der Technik

Es ist zur Reinigung von Rinderställen bekannt, ein Räumgerät im Kotgang des Stalles anzuordnen, das durch einen Seilzug eine hin- und hergehende Räumbewegung in einem in den Stallboden eingelassenen Kotgang ausführt (DE-GM 1 996 297). Als Räumgerät dient ein flacher Räumschieber, der zwei gelenkig miteinander verbundenen Flügel aufweist, die an den Rändern des Kotganges anliegen. Der von einem ortsfesten Elektromotor angetriebene Seilzug verläuft in einer schmalen Nut in der Mitte des Kotganges unterhalb des Räumschiebers und ist mit diesem gekoppelt.

Der Elektromotor kann mit einer Steuereinrichtung verbunden sein, die in der Bewegungsbahn des Räumschieber angeordnete Endschalter umfasst, über die die End- und Umschaltpunkte der Bewegung des Räumschiebers festgelegt werden. Die Steuereinrichtung muß auch auf Signale ansprechen, die anzeigen, dass sich ein Hindernis in der Bewegungsbahn des Räumschiebers befindet. Hierbei kann es sich um eine Kuh handeln, die in der Bewegungsbahn steht oder Stallgeräte, die in unzulässiger Weise dort abgestellt worden sind. Es ist vorgeschlagen worden, zur Anzeige einer solchen Situation die Stromaufnahme des Antriebsmotors zu messen und bei erhöhter Stromaufnahme eine Abschaltung des Antriebs vorzunehmen sowie ein Alarmsignal zu erzeugen. Die Ansprechempfindlichkeit einer solchen Anordnung wird durch das Untersetzunggetriebe beeinträchtigt, das üblicherweise mit dem Antriebsmotor gekoppelt ist.

### Zusammenfassung der Erfindung

Durch die Erfindung wird eine Reinigungseinrichtung für Ställe angegeben, die einen parallel zu den Standplätzen der Tiere verlaufenden Kotgang und einen Räumschieber aufweist, der über einen Antrieb und einen Seilzug entlang des Kotganges bewegt wird. Eine Antriebssteuerung legt den Anfang und das Ende der Bewegung des Räumschiebers fest und steuert seinen Rücklauf.

Die Erfindung, wie sie in den Ansprüchen gekennzeichnet ist, sieht eine Einrichtung zur Anzeige der Position des Schiebers entlang seiner Bewegungsbahn und einen Drehmoment-Sensor vor, der mit dem Antrieb des Seilzugs gekoppelt ist und der zur jeweiligen Position des Räumschiebers das am Antrieb wirksame Belastungsdrehmoment feststellt und ein entsprechendes Anzeigesignal an die Steuerung liefert. Die Steuerung ist mit einem Computer verbunden, der eine wegabhängige Drehmomentenkurve speichert, mit der die gemessenen Drehmomentsignale verglichen werden. Die Steuerung bewirkt ein Abschalten des Antriebs, wenn das Drehmomentsignal einen von der Drehmomentenkurve abweichenden Spitzenwert anzeigt, der einen voreingestellten Schwellwert überschreitet.

Gemäß einer vorteilhaften Ausführungsform der Erfindung umfasst die Einrichtung zur Positionsanzeige einen Wegsensor, der den vom Räumschieber zurückgelegten Weg durch induktive Drehwinkelmessung am Antrieb des Seilzugs und durch Umrechnen der gemessenen Drehwinkels in ein Wegmaß bestimmt.

Eine weitere vorteilhafte Ausgestaltung der Erfindung besteht darin, dass ein Antriebsblock, der einen Elektromotor und ein Getriebe umfasst, unter der Zugkraft des Seilzugs gegen eine Dämpfungseinrichtung auslenkbar ist und das Maß der Auslenkung zur Feststellung des Belastungsdrehmoments dient.

Nach einer weiteren vorteilhaften Ausgestaltung der Erfindung umfasst der Drehmomentsensor einen magnetinduktiven Linearwegsensor. Ein Antriebsblock, der einen Elektromotor und ein Getriebe umfasst und beweglich gelagert ist, stützt sich bei Belastung des Seilzugs an einer Feder ab, die mit zunehmender Belastung des Seilzugs eine Auslenkung des Antriebsblocks gestattet. Am Antriebsblock ist ein Verbindungselement angeordnet, das einen Magneten des magnetinduktiven Linearwegsensor trägt und diesen am Gehäuse des Linearwegsensors entlang führt, wenn der Antriebsblock ausgelenkt wird, so dass der Linearwegsensor ein Ausgangssignal erzeugt, das die momentane Belastung des Seilzugs anzeigt.

Die erfindungsgemäße Einrichtung ermöglicht eine empfindliche und schnell Anzeige von von Hindernissen in der Bewegungsbahn des Räumschiebers und bietet dadurch einen erhöhten Schutz für die Tiere und verhindert Überlastungen der Antriebselemente, des Seilzugs und des Räumschiebers.

Die Erfindung betrifft auch ein Verfahren zur Reinigung von Ställen, das die Schritte umfasst:
Feststellen und Anzeigen der Position des Räumschiebers entlang seiner Bewegungsbahn;
Messung des Belastungsdrehmoments an einer Aufwickeltrommel des Seilzugs während der Bewegung des Räumschiebers entlang seiner Bewegungsbahn und Erzeugung von Anzeigesignalen, die das an der Aufwickeltrommel jeweils wirksame Drehmoment anzeigen;
Erzeugung und Speicherung einer Drehmomentenkurve über die Bewegungsbahn des Räumschiebers in Abhängigkeit vom Dungvolumen, das mit dem zurückgelegten Weg ansteigt; Vergleich der während der Bewegung des Räumschiebers entlang seiner Bewegungsbahn gemessenen Drehmoment-Anzeigesignale mit der gespeicherten Drehmomentenkurve; und
Unterbrechen der Bewegung des Räumschiebers, wenn der Vergleich einen steilen Anstieg des Drehmoments über den Verlauf der Drehmomentenkurve anzeigt, der einen voreingestellten Schwellwert überschreitet.

### Beschreibung der Zeichnungen

Nachfolgend wird ein Ausführungsbeispiel der Erfindung anhand von Zeichnungen erläutert. Es zeigen:
- Figur 1: eine schematische Darstellung einer Reinigungseinrichtung für Rinderställe;
- Figur 2: eine Draufsicht auf die Reinigungseinrichtung nach Figur 1;
- Figur 3: eine schematische Darstellung der Bewegungsbahn des Räumschiebers der Reinigungseinrichtung von Figur 1;
- Figur 4: Seitenansicht ein Antriebsaggregat, wie es in der Einrichtung von Figur 1 verwendet wird;
- Figur 5: Ansicht in Richtung C auf das Antriebsaggregat nach Figur 4; und
- Figur 6: Ansicht in Richtung D auf das Antriebsaggregat nach Figur 5;
- Figur 7: Draufsicht auf das Antriebsaggregat nach Figur 5;
- Figur 8: ein Blockdiagramm einer Steuereinrichtung, die in der Reinigungseinrichtung von Figur 1 verwendet wird;
- Figur 9: ein Blockdiagramm zur Darstellung der Steuerfunktionen und des Verfahrensablaufes der Kuhstoppfunktion gemäß der Erfindung;
- Figur 10: ein Beispiel einer wegabhängigen Drehmomentenkurve und einer zugehörigen Korrekturkurve sowie einer Belastungskurve zur Erläuterung des Verfahrensablaufes nach Figur 9; und
- Figur 11: ein Blockdiagramm eines Menüs zur Einstellung der Parameter der Kuhstoppfunktion gemäß der Erfindung.

### Detaillierte Beschreibung der dargestellten Ausführungsbeispiele

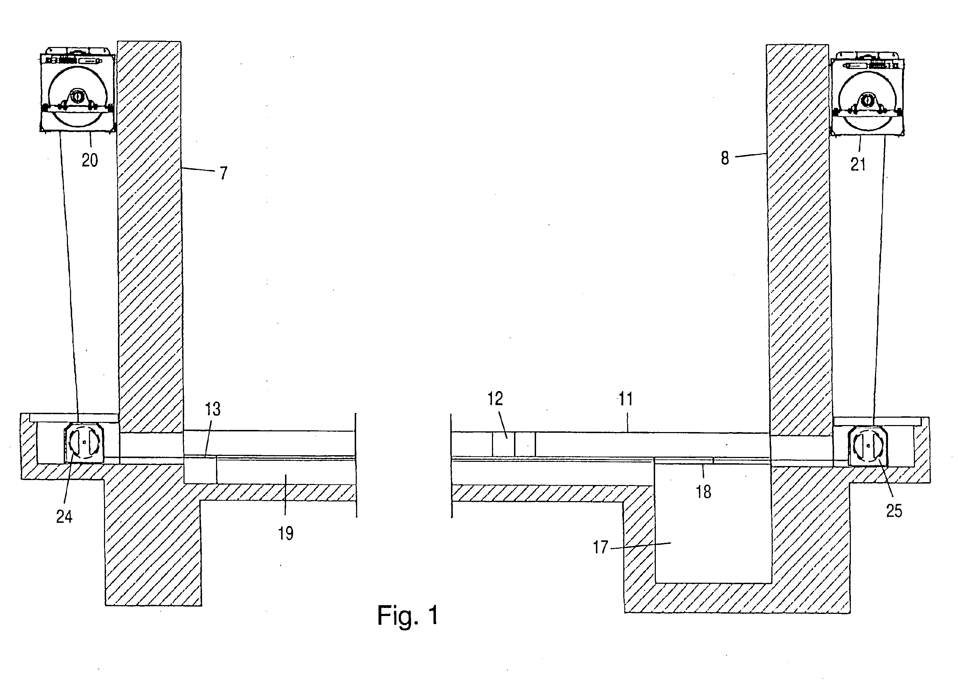

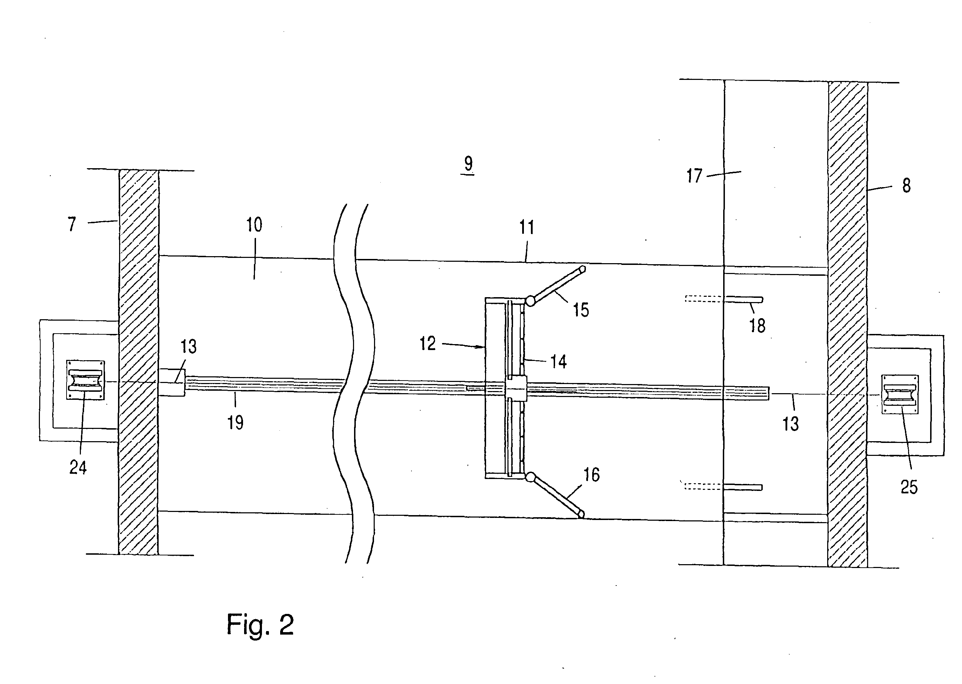

In den Figuren 1 und 2 ist ein viehstall schematisch dargestellt, der vorzugsweise als Liegbuchtenstall für Rinder ausgebildet ist und der vor einem Stand- und Liegebereich 9 einen Kotgang 10 aufweist, der aus einem in den Stallboden eingelassenen Schacht 11 besteht, in dem ein Räumschieber 12 durch einen Seilzug 13 bewegt wird. Der Räumschieber 12 ist in für sich bekannter Weise als Schrapper ausgebildet, der einen Mittelteil 14 und an diesem gelenkig angeordnete Flügel 15, 16 aufweist. Die freien Enden der Flügel 15, 16 liegen an den Rändern des Schachtes 11 an, wenn der Räumschieber 12 eine Dungräumbewegung in Vorwärtsrichtung ausführt. Der Kotgang 10 stellt somit zugleich die Bewegungsbahn des Räumschiebers 12 dar. Am Ende des Kotganges 10 befindet sich ein Querkanal 17, der zur Aufnahme des vom Räumschieber 12 geförderten Dungs dient und der in für sich bekannter Weise in bestimmten Zeitintervallen geräumt wird. Führungsschienen 18 überbrücken einen Teil des Querkanals 17 und dienen zur Stützung des Räumschiebers 12, wenn dieser über den Rand des Querkanals 17 bewegt wird. Unterhalb des Schachts 11 ist ein Kunststoffrohr 19 angeordnet, das zur Ableitung von Gülle in den Querkanal 17 dient. Zum Antrieb des Räumschiebers 12 sind Antriebsaggregate 20, 21 vorgesehen, die an den Außenseiten von Seitenwänden 7, 8 des Stallgebäudes montiert sind. Der Seilzug 13 führt vom Antriebsaggregat 20 über eine auf Höhe des Stallbodens angeordnete Umlenkrolle 24 zum Räumschieber 12 und von dort über eine Umlenkrolle 25 zum Antriebsaggregat 21, das den Vorwärtslauf des Räumschiebers 12 bewirkt. Das Antriebsaggregat 20 befindet sich hierbei im Leerlaufzustand. Nachdem der Räumschiebers 12 das Ende der Vorwärtsbewegung erreicht hat, wird das Antriebsaggregat 20 wirksam, um den Räumschieber zurück in Startposition zu bringen. Hierbei befindet sich das Antriebsaggregat 21 im Leerlaufzustand.

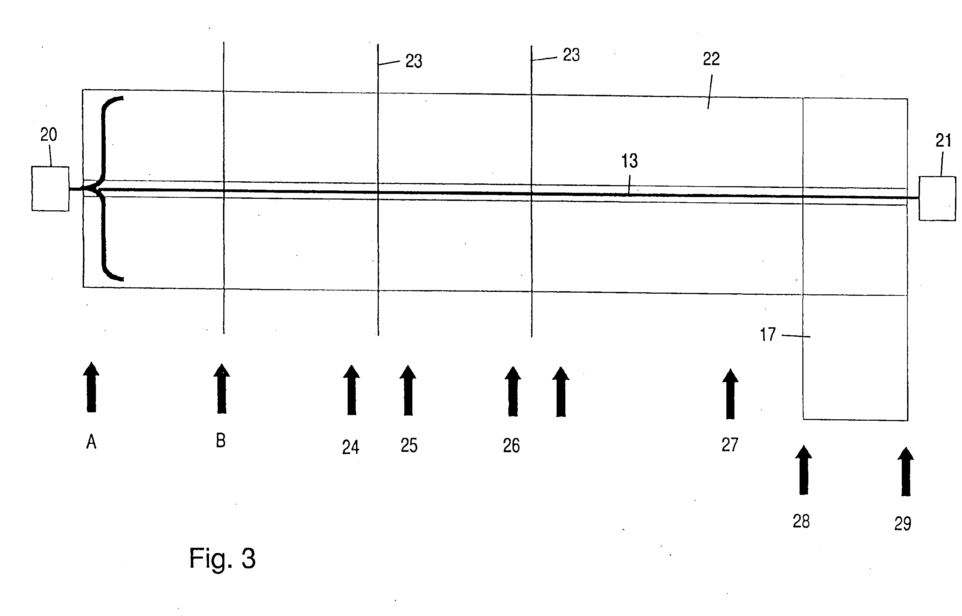

Die Figur 3 zeigt eine Draufsicht auf die Bewegungsbahn 22 des Räumschiebers 12 in einer schematischen Darstellung zur Veranschaulichung der verschiedenen Bewegungsabschnitte. In Abhängigkeit von den örtlichen Gegebenheiten können in einem Stall auch mehrere Bewegungsbahnen nach Art der Bewegungsbahn 22 angeordnet werden, von denen jede mit einem eigenen Räumschieber und einem eigenen Antrieb ausgestattet ist. Die Bewegungsbahn 22, die hierin auch als Räumbahn bezeichnet wird, beginnt wahlweise an einem der Startpunkte A oder B. Im Bereich zwischen A und B kann eine Abkalbbox angeordnet sein, die mit Rücksicht auf die Kälber eine separate Entmistung erfordert. In einem solchen Falle kann der Startpunkt B für den Beginn der Räumbewegung gewählt werden. Bei Fehlen einer Abkalbbox beginnt die Räumbewegung bei A. Die Bewegungsbahn 22 erstreckt sich über das gesamte Stallgebäude und kann z.B. 100 m lang sein. Üblicherweise ist der Stall durch Trennwände 23 unterteilt, die sich auch über die Bewegungsbahn 22 ausdehnen. Der Räumschieber 12 fährt unter diesen Trennwänden 23 hindurch. Zur Vermeidung einer Verletzungsgefahr der Tiere oder von Bedienungspersonen fährt der Räumschieber zunächst bis zu einem Sicherheitsabstand vor der ersten Trennwand 23, der durch den Pfeil 24 dargestellt wird, und führt danach unter der Trennwand 23 hindurch bis zu einem Punkt 25 nur Schrittbewegungen durch. Trifft der Räumschieber 12 hierbei auf einen Widerstand, wird er vom Antriebsaggregat 20 gezogen um eine bestimmte Wegstrecke zurückbewegt. Danach beginnt er erneut eine schrittweise Vorwärtsbewegung unter der Wirkung des Antriebsaggregats 21. Entsprechendes gilt auch, wenn der Räumschieber 12 an einem beliebigen anderen Punkt der Räumbahn auf einen Widerstand trifft, unabhängig davon, ob der Räumschieber in Vorwärts- oder Rückwärtsrichtung bewegt wird. Nach dem Passieren einer Trennwand 23 wird vom Ort des Pfeiles 25 die kontinuierliche Vorwärtsbewegung fortgesetzt, bis der Sicherheitsabstand 26 vor der nächsten Trennwand 23 erreicht ist. Am Ende der Bewegungsbahn 22 findet der Abwurf des transportierten Dungs in den Querkanal 17 statt. In einem vorgegebenen Abstand 27 vor dem Querkanal 17 kann der Räumschieber 12 wiederum Schrittbewegungen ausführen, um das abzuwerfende Dungvolumen an das Fassungsvermögen des Querkanals 17 anzupassen und eine Verstopfung des Querkanals 17 zu vermeiden. Am Rand des Qüerkanals 17 hält der Räumschieber 12 an, um den restlichen Dung in den Querschieber zu befördern. In Figur 3 ist dies durch den Pfeil 28 dargestellt. Am Endpunkt 29 der Bewegungsbahn wird über einen Endschalter der Antrieb auf das Antriebsaggregat 20 umgeschaltet, das den Räumschieber 12 in die Startposition zurückführt.

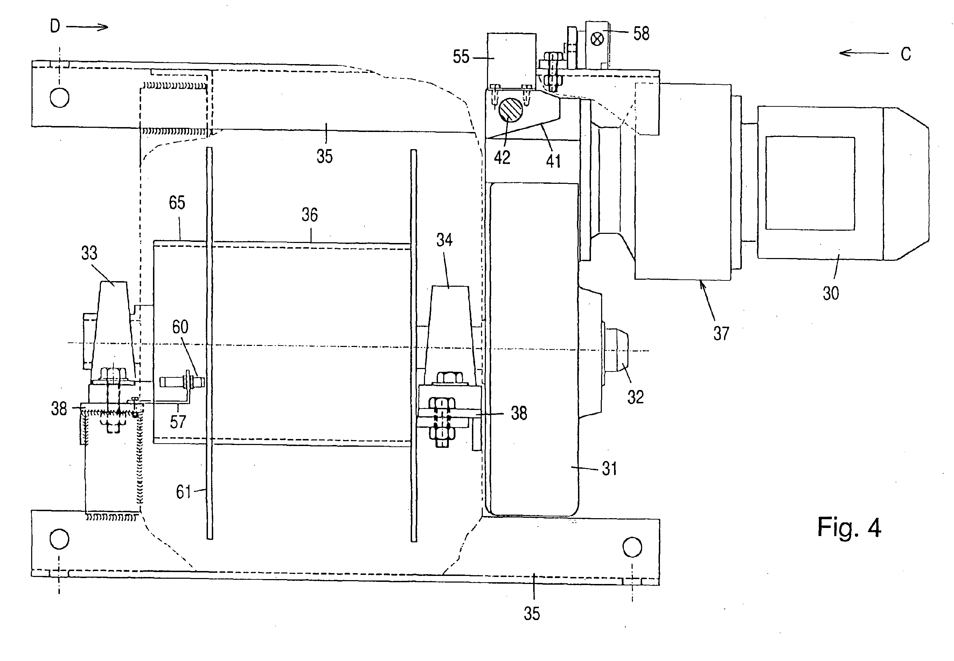

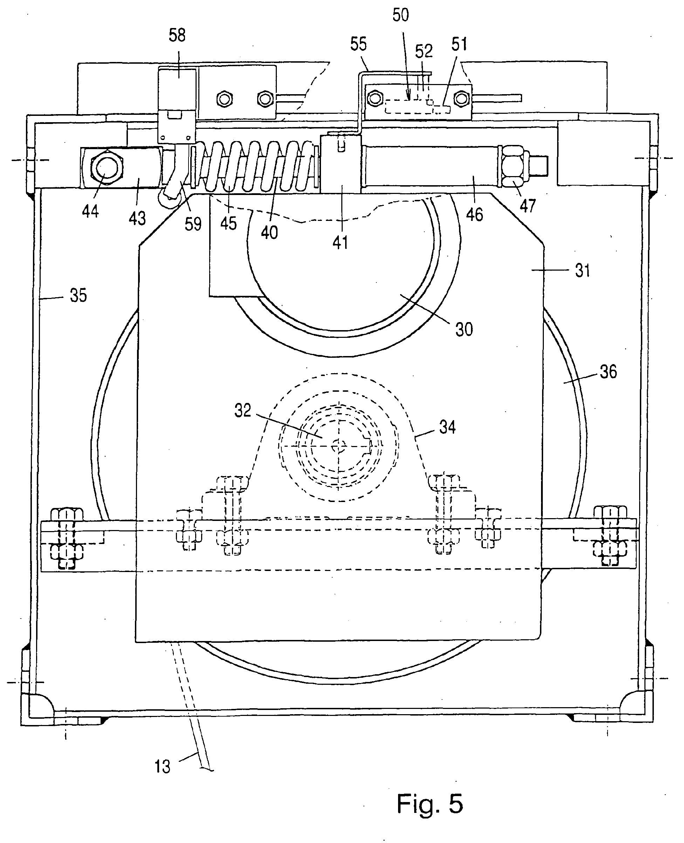

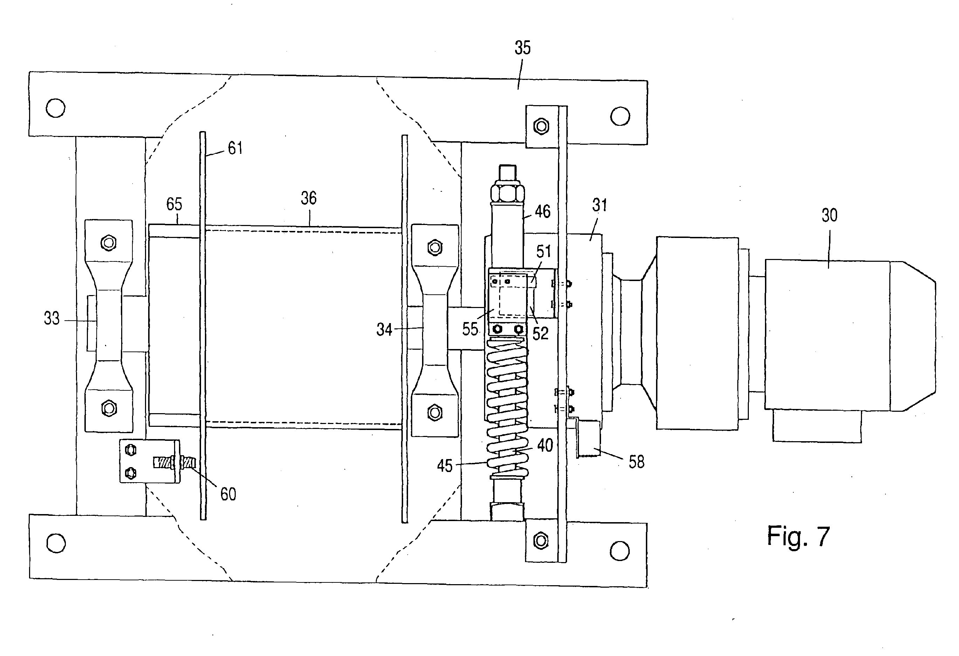

Die Figur 4 zeigt in Seitenansicht den Aufbau eines der Antriebsaggregate 20, 21. Das dargestellte Antriebsaggregat umfasst einen Elektromotor 30, der an ein Untersetzungsgetriebe 31 angeflanscht ist. Über das Getriebe 31 wird eine in Lagerböcken 33, 34 gelagerte Welle 32 angetrieben. Die Lagerböcke 33, 34 sind auf einer Winkelschiene 38 befestigt, die mit einem Rahmen 35 verbunden ist. Auf der Welle 32 ist zwischen den Lagerböcken 33 und 34 eine Seiltrommel 36 angeordnet und in für sich bekannter Weise mit der Welle verbunden. Die Seiltrommel 36 dient als Seilwinde für den Seilzug 13. Auf einem außerhalb des Lagerbocks 34 befindlichen Teil der Welle 32 ist ein aus Motor 30 und Getriebe 31 bestehender Antriebsblock 37 schwenkbar auf der Welle 32 gelagert und wird durch eine Führungsstange 40 in seiner Ruhelage gehalten (Figuren 5 und 7). Am Gehäuse des Getriebes 31 ist eine Verlängerung in Form einer Lasche 41 angeordnet, die eine Bohrung 42 aufweist, in der sich die Führungsstange 40 befindet. Ein an der Führungsstange 40 befestigter Gabelkopf 43 und ein Schraubenbolzen 44 verbinden die Führungsstange 40 gelenkig mit dem Rahmen 35. Auf der Führungsstange 40 ist eine Druckfeder 45 angeordnet, die sich einerseits am Gabelkopf 43 und andererseits an der Lasche 41 abstützt. Auf der entgegengesetzten Seite der Lasche 41 befindet sich ein Rohrstück 46 auf der Führungsstange 40, das sich an einer gesicherten Mutter 47 am freien Ende der Führungstange 40 abstützt und an dem die Lasche 41 anliegt. Wenn der Seilzug 13 unter Last steht, wird auf die Seiltrommel 36 ein Drehmoment ausgeübt, das in Bezug auf Figur 5 im Uhrzeigersinn wirkt. Hierbei wird die Lasche 41 gegen die Feder 45 gedrückt und der Motor 30 mit dem Getriebe 31 in der gleichen Richtung um einen Winkelbetrag verschwenkt, der von der Größe des vom Seilzug 13 auf die Seiltrommel 36 ausgeübten Belastungsdrehmoments abhängt. Die Feder 45 wirkt somit als Dämpfungseinrichtung, die eine belastungsabhängige Auslenkung des Antriebsblock 37 gestattet, wobei das Maß der Auslenkung zur Feststellung des Belastungsdrehmoments dient.

Im Antriebsaggregat 21, das den Vorwärtslauf des Räumschiebers ausführt, wird die Schwenkbewegung des Motorund Getriebeblocks 30, 31 auf einen Belastungssensor 50 übertragen, der das über die Seiltrommel 36 wirkende Drehmoment anzeigt. Der Belastungssensor 50 ist ein für sich bekannter magnetinduktiver Linearwegsensor, wie er z.B. in der Veröffentlichung "Magnetinduktive Linearwegsensoren" von O. Marks, Maschinenmarkt (MM), Juni/Juli 2003, Seiten 38, 39 beschrieben ist. Der Belastungssensor 50 umfasst ein ortsfest angeordnetes Sensorgehäuse 51 und einen über das Sensorgehäuse 51 geführten Permanentmagneten 52. Das Sensorgehäuse 51 weist eine in den Figuren 5-7 nichtdargestellte Ausgangsleitung auf, auf der der Belastungssensor 50 ein Signal liefert, das eine Anzeige für die Postion des Magneten 52 darstellt. Das Ausgangssignal kann z.B. ein Analogsignal sein, das 0 Volt beträgt, wenn sich der Magnet 52 in Ruhelage befindet, und 10 Volt beträgt, wenn sich der Magnet 52 in der Position seiner größten Auslenkung befindet.

An der Lasche 41 ist ist ein Winkel 55 angeordnet, das den Permanentmagneten 52 des Belastungssensors 50 trägt, so dass sich der Permanentmagnet 52 dicht oberhalb des Sensorgehäuses 51 befindet und mit der Verschwenkung des Motor- und Getriebeblocks 30, 31 am Sensorgehäuse 51 entlang bewegt wird. Das Ausgangssignal des Sensors 50 liefert daher eine Anzeige für der Größe des Drehmoments, das über die Seiltrommel 36 übertragen wird, und damit auch eine direkte Anzeige der Belastung, der der Seilzug 13 ausgesetzt ist.

Des weiteren ist ein Endschalter 58 am Rahmen 35 angeordnet, der einen Schaltarm 59 aufweist, der vom Motorund Getriebeblocks 30, 31 betätigt wird, wenn dieser um einen vorgegebenen Maximalbetrag um die Welle 32 verschwenkt wird. Die Betätigung des Endschalters 58 löst eine Sicherheitsabschaltung aus, wenn eine Störung in der Steuerung der Anlage im Fahrbetrieb (Figur 3) vom Startpunkt A bis zu dem durch Pfeil 29 markierten Punkt minus eine Weglänge X auftreten sollte. Es wird eine Synchronisierumschaltung ausgelöst, wenn der Endschalter 58 im Bereich vom Punkt 29 - X Meter betätigt wird, wobei x eine Distanz zwischen den Markierungen 28 und 29 ist. In diesem Falle wird das in Vorwärtsrichtung wirkende Antriebsaggregat 21 abgeschaltet.

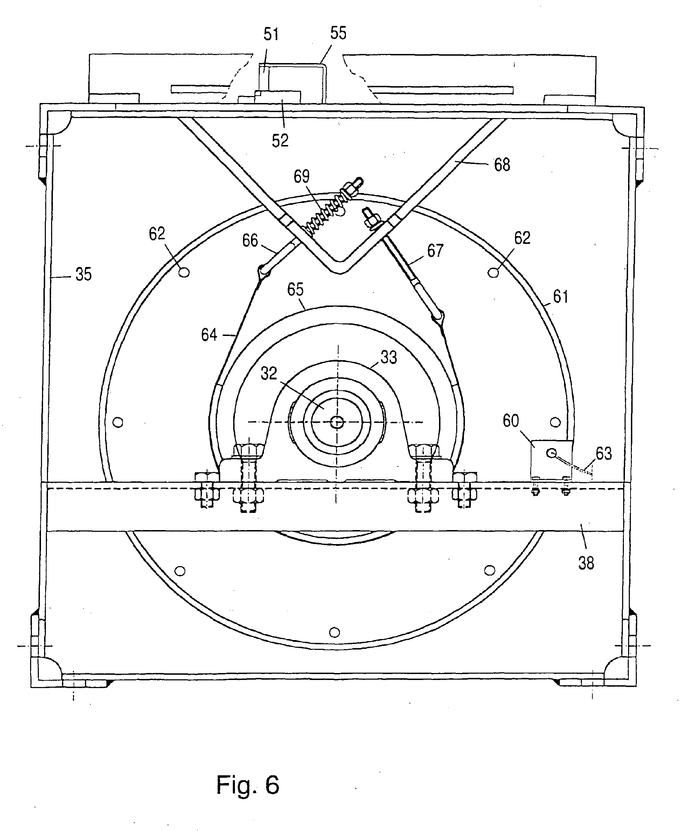

An der Winkelschiene 38 ist mittels eines Winkelblechs 57 ein Wegsensor 60 angeordnet, der mit einem Flansch 61 der Seiltrommel 36 zusammenwirkt (Figuren 6 und 7). Der Flansch 61 weist eine Anzahl Bohrungen 62 auf, die auf einer Kreislinie in einem vorgegebenen Winkelabstand angeordnet sind (Figur 6). Im dargestellten Ausführungsbeispiel sind acht Bohrungen 62 mit einem winkelabstand von 45 Grad vorgesehen. Dem Flansch 61 dicht benachbart und gegenüber der Umfangslinie der Bohrungen 62 ist der Wegsensor 60 angeordnet, der als ein für sich bekannter induktiver Taster ausgebildet ist und beim Vorbeigang einer Bohrung 62 ein Ausgangssignal in Form eines Spannungsimpulses auf einer Ausgangsleitung 63 erzeugt. Anstelle eines induktiven Tasters kann auch ein anderer Sensortyp Verwendung finden, wie z.B. ein optischer Abtaster, eine kapazitiver Abtaster oder galvanische Kontakte. Im dargestellten Ausführungsbeispiel entspricht der zeitliche Abstand zwischen zwei aufeinanderfolgenden Ausgangssignalen z.B. 0,15 m Wegstrecke des Räumschiebers 12. Aus der zurückgelegten Wegstrecke kann jederzeit die Position des Räumschiebers 12 in seiner Bewegungsbahn festgestellt werden.

Anstatt mit Hilfe eines Wegsensors kann die Wegstrecke des Räumschiebers 12 und seine Position in der Bewegungsbahn auch durch zeitmessung festgestellt werden. Hierzu werden die Zeiteinheiten gemessen, in denen der Räumschiebers 12 mit weitgehend konstanter Geschwindigkeit über die Bewegungsbahn 22 bewegt wird. Da jedoch belastungsabhängige Schwankungen der Geschwindigkeit des Räumschiebers 12 auftreten können, hat eine Positionsbestimmung unter Verwendung einer Zeitmessung nicht die Genauigkeit, die durch die oben beschriebene Wegmessung erreicht wird.

Die Figur 6 zeigt auch eine Bremseinrichtung für die Seiltrommel 36. Ein Stahlband 64 umschlingt einen Bremszylinder 65, der am Flansch 61 der Seiltrommel 36 befestigt ist. Das Stahlband wird durch zwei Schraubenbolzen 66, 67 gespannt, die von an einem winkelblech 68 gehalten werden. Auf dem Schraubenbolzen 66 ist eine Feder 69 angeordnet, über die das Stahlband 64 und damit die Bremswirkung eingestellt werden kann. Die Bremseinrichtung verhindert ein Überschleudern der Seiltrommel 36, wenn sich das betreffende Antriebsaggregat 20 oder 21 im Leerlauf befindet und der Antrieb des Räumschiebers 12 abgeschaltet wird.

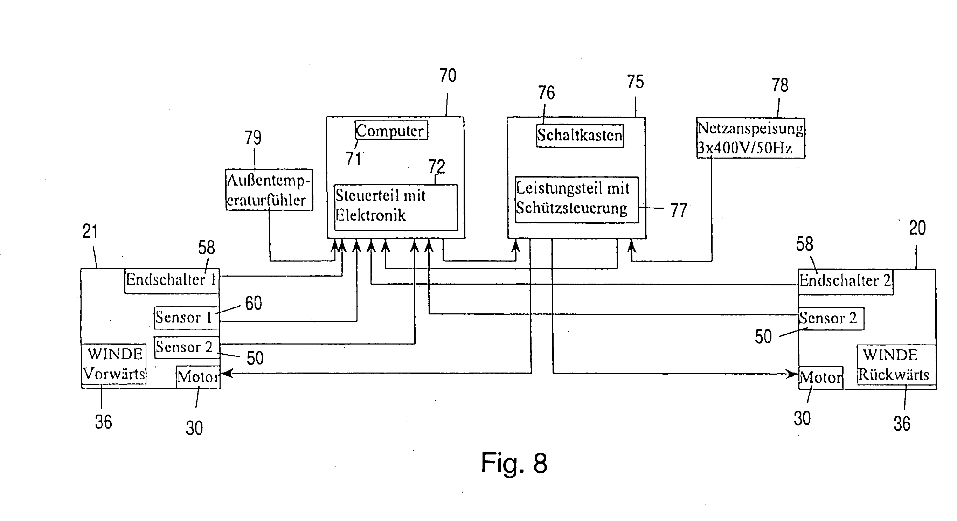

Im folgenden werden die Steuerfunktionen für die Bewegungen des Räumschiebers 12 beschrieben. Das Blockdiagramm von Figur 8 zeigt eine Steuereinrichtung 70, die einen Computer 71 bekannter Bauart mit einem Speicher und einem Display enthält. Des weiteren enthält die Steuereinrichtung 70 einen Steuerteil 72, hierin auch Steuerung oder Steuereinheit genannt, die Eingangssignale von den Sensoren 50, 60 und den Endschaltern 58 in den Antriebsaggregaten 20, 21 empfängt und Steuersignale an eine Schalteinheit 75 liefert. Die Schalteinheit 75 umfasst einen Schaltkasten 76 und einen Leistungsteil mit einer Schützensteuerung 77 und schaltet die Motoren 30 in den Antriebsaggregaten 20 und 21 zum Antrieb der Seiltrommeln 36 ein und aus. Ein Netzteil 78 dient zur Stromversorgung der Steuereinrichtung 70 und der Schalteinheit 75. Ein Außentemperaturfühler 79 liefert eine Temperaturanzeige an die Steuereinheit 72.

Die Steuereinrichtung 70 bewirkt, dass der Räumschieber 12 im Ruhezustand in Startposition A oder B steht und steuert die in Verbindung mit Figur 3 beschriebenen Bewegungsabläufe des Räumschiebers 12 einschließlich seines Rücklaufes in die Startposition. Dies geschieht durch Empfang und Verarbeitung der Signale des Wegsensors 60 im Antriebsaggregat 21, von Drehmomentsensoren 60 und Endschaltern 58 jeweils in beiden Antriebsaggregaten 21 und 20, sowie durch Steuerung der Motoren 30 in beiden Antriebsaggregaten 21 und 20. In Figur 7 wird der Wegsensor 60 auch als Sensor 1 und Drehmomentsensoren 60 auch als Sensoren 2 bezeichnet. Für den Rücklauf des Räumschiebers 12, der unter der Wirkung des Antriebsaggregat 20 erfolgt, werden die Signale vom Wegsensor 60 im Antriebsaggregat 21 benutzt, das im Leerlauf mitläuft.

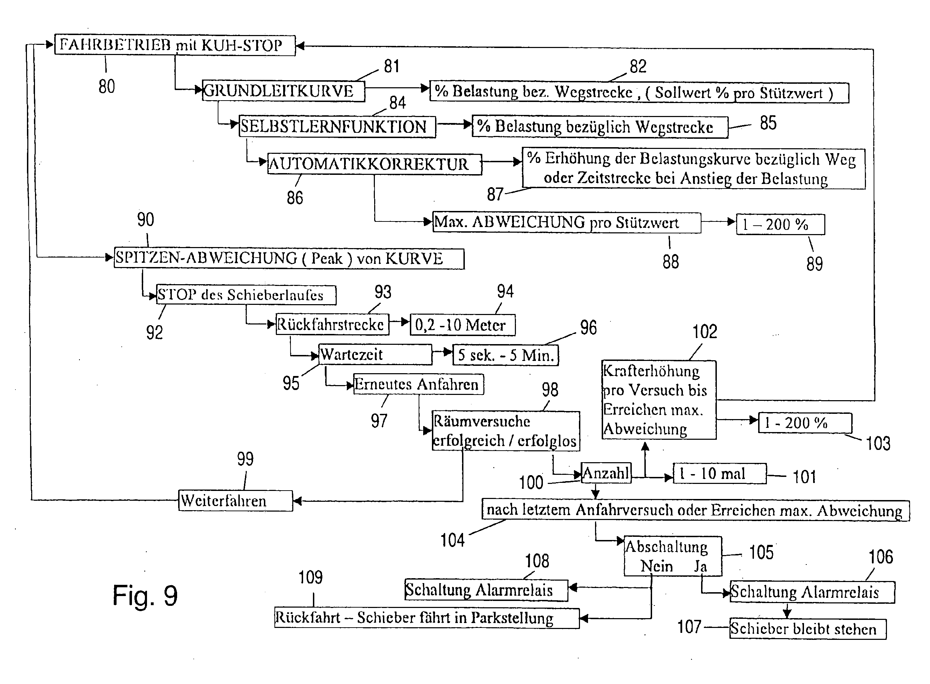

Die Figur 9 zeigt ein Blockdiagramm zur Veranschaulichung der Wirkungsweise der Erfindung. Das Blockdiagramm betrifft den Fahrbetrieb mit der erfindungsgemäßen Stoppfunktion 80, die hierin auch Kuh-Stopp genannt wird. Die Einrichtung umfasst eine Grundleitkurve 81, die im Speicher des Computers 71 gespeichert wird. Die Grundleitkurve 81 stellt die Belastung des Seilzugs 13 über die gesamte Weglänge des Räumschiebers 12 in Prozentwerten der in Kilogramm gemessenen Belastung dar. Die Belastung des Seilzugs 13 hängt im Normalbetrieb vom Dungvolumen ab, das der Räumschieber 12 zu transportieren hat. Das Dungvolumen steigt über die Länge des Fahrwegs von Null bis zu einem Maximalwert an, der von der Länge der Bewegungsbahn 22 abhängt und ein Gewicht von z.B. 200 Kg haben kann. Die Grundleitkurve 81 wird gebildet durch Festlegen einer Anzahl von Stützpunkten entlang der Bewegungsbahn, an denen die Belastung für die örtlichen Gegebenheiten empirisch ermittelt und in den Speicher des Computers 71 eingegeben wird. Hierbei wird auch die Wirkung der Bremseinrichtung 64-69 berücksichtigt. Es können z.B. 30 Stützpunkte festgelegt werden, die gleichmäßig über die Bewegungsbahn verteilt sind. Zu Aufsuchen der Stützpunkte liefert der Wegsensor 60 im Antriebsaggregat 20 die Anzeige für die Position des Räumschiebers 12. Aus den Werten der Stützpunkte wird eine Grundleitkurve 81 interpoliert, die im einfachsten Fall eine Gerade sein kann bei einem linearen Anstieg der Belastung über die gesamte Weglänge.

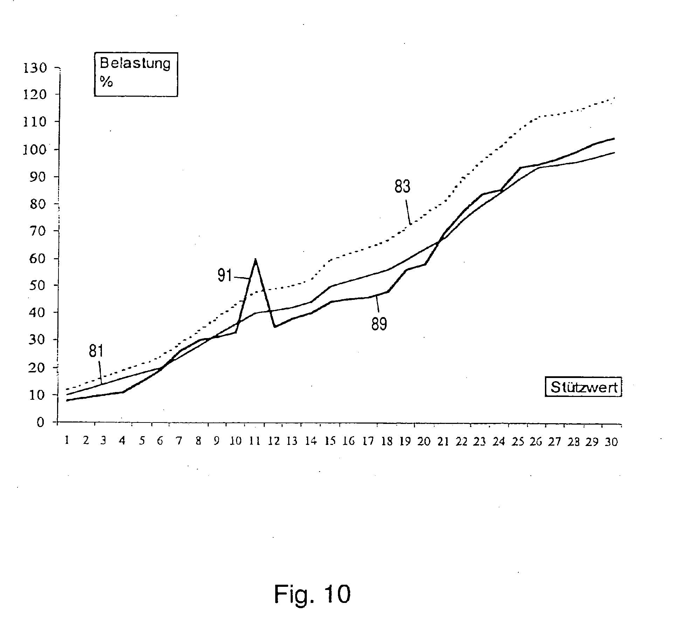

Die Figur 10 zeigt ein Beispiel für die Grundleitkurve 81. Auf der Abzissenachse sind 30 Stützpunkte über die Länge der Bewegungsbahn 22 des Räumschiebers 12 eingetragen und auf der Ordinatenachse ist die Belastung in % einer vorgegebenen Maximalbelastung eingetragen. Die Darstellung zeigt einen annähernd linearen Anstieg der Grundleitkurve 81 von einem Anfangswert von 10% am ersten Stützpunkt bis zu einem Maximalwert von 100% am letzten Stützpunkt.

Der Grundleitkurve 81 ist eine Änderungsfunktion 82 zugeordnet, die es ermöglicht, zu den Stützpunkten eine prozentuale Änderung einzugeben. In Figur 9 zeigt eine Kurve 83 ein Beispiel für eine annähernd zwanzigprozentige Änderung der Grundleitkurve 81. Auf diese Weise kann die Grundleitkurve an Abweichungen vom Standardbetrieb angepasst werden, z.B. das Vorhandensein von schweren Dung oder eine verringerte Anzahl von Rindern. Die Eingabe der Werte für die Grundleitkurve und der Änderungswerte wird erleichtert durch eine Selbstlernfunktion 84, die es ermöglicht, dass beim Durchfahren der Bewegungsbahn 22 für einen typischen Räumvorgang die vorliegenden Belastungswerte gemäß der Grundleitkurve 81 an den vorgegebenen Stützpunkten automatisch im Speicher des Computers 71 angepasst werden. Hierbei liefert der Wegsensor 60 im Antriebsaggregat 21 in Form eines Impulses nach jeweils 0,15 m die Anzeige über den Weg, den der Räumschieber 12 zurückgelegt hat. Aus dieser Anzeige errechnet der Computer 71 den Ort des Stützpunktes für die Eingabe des Belastungswertes. Auch bei Anwendung der Selbstlernfunktion 84 können die registrierten Belastungswerte durch Block 85 prozentual geändert werden. Die Selbstlernfunktion 84 ist mit einer Automatikkorrektur 86 gekoppelt, die dann wirksam wird, wenn gemäß Block 87 eine prozentuale Erhöhung der Grundleitkurve 81 bezüglich der gesamten Wegstrecke für einen Anstieg der Belastung pro Stützwert erfolgen soll. Dies kann z.B. notwendig sein, wenn der Außentemperaturfühler 79 eine niedrige Temperatur anzeigt, bei der der Dung eine festere Konsistenz aufweist und schwerer ist. Der Automatikkorrektur 86 ist ein Grenzwertgeber 88 zugeordnet, durch den eine maximale Abweichung festgelegt werden kann, die gemäß Blovk 89 zwischen 1% und 200% liegen kann.

Im regulären Betrieb arbeitet die Anordnung gemäß der gespeicherten Grundleitkurve 81. Hierbei zeigt der Belastungssensor 50 (Sensor 2) im Antriebsaggregat 20 oder 21 die jeweilige Belastung des Seilzugs 13 durch Messung des Drehmoments an der Seiltrommel 36. Die gemessenen Werte werden über den gesamten Fahrweg des Räumschiebers 12 mit der Änderungen und Korrekturen gemäß Block 83, 86 und 87 berücksichtigt. In Figur 9 zeigt eine Kurve 89 ein Beispiel für eine vom Belastungssensor 50 über die Länge der Bewegungsbahn 22 gemessene Drehmomentenkurve 89 der gemessenen Belastungen, die über ihren größten Teil nur geringe prozentuale Abweichungen von der Grundleitkurve 81 zeigt.

Eine Kuhstoppfunktion 90 prüft die Vergleiche der gemessenen Werte mit der gespeicherten Grundleitkurve 81 auf das Auftreten einer Spitzenabweichung, die während der Bewegung des Räumschiebers 12 vom Belastungssensor 50 angezeigt wird. Hierzu werden die Resultate der Vergleiche auf einen Spitzenwert überprüft, der die gespeicherten Belastungswerten einschließlich aller Änderungen und Korrekturen übersteigt. In Figur 8 weist die Drehmomentenkurve 89 für die gemessenen Belastungen eine solche Spitzabweichung 91 beim Stützpunkt 11 auf, die anzeigt, dass sich in der Bewegungsbahn des Räumschiebers 12 ein Hindernis befindet, das z.B. eine Kuh sein kann. Wenn ein derartiger Spitzenwert festgestellt wird, erfolgt eine Unterbrechung der Bewegung des Räumschiebers 12 entsprechend Block 92 und im folgenden Schritt 93 unter der Wirkung des Antriebsaggregats 20 ein Zurückfahren des Räumschiebers 12 um eine vorbestimmte Wegstrecke, die vom Wegsensor 60 des Antriebsaggregats 20 angezeigt wird. Gemäß Block 94 ist der Rückfahrweg von 0,2 m bis 10 m einstellbar. Im Schritt 95 folgt eine Wartezeit, in der der Räumschieber 12 in der zurückgefahrenen Stellung stillsteht. Gemäß Block 96 ist die Wartezeit von 5 Sekunden bis 5 Minuten einstellbar. Wenn das Hindernis eine in der Bewegungsbahn 22 stehende Kuh ist, ist es wahrscheinlich, dass das Tier in der Wartezeit seinen Standplatz gewechselt und die Bewegungsbahn 22 verlassen hat. Im Schritt 97 veranlaßt die Steuerung 72 ein Wiederanfahren des Räumschiebers 12 für einen erneuten Versuch, den Räumvorgang fortzusetzen.

Der Schritt 98 prüft, ob dieser Versuch erfolgreich ist. Ist dies der Fall, wird im Schritt 99 ein Weiterfahren des Räumschiebers 12 entsprechend der gespeicherten Grundleitkurve 81. Andernfalls wird erneut eine Spitzenabweichung gemäß Block 90 festgestellt mit der Folge, dass die Schritte 92, 93, 95 und 97 erneut ausgeführt werden. Der Block 100 gibt an, wieviel Versuche, den Räumvorgang fortzusetzen, ausgeführt werden sollen. Sie dies mehr als einer, geht die Steuerung zurück zu Block 80. Die Zahl der auzuführenden Versuche kann gemäß Schritt 101 auf einen Wert von 1 bis 10 voreingestellt werden. zusätzlich kann im Schritt 102 eine Erhöhung der Belastungskurve veranlaßt werden bis zum Erreichen der maximalen Abweichung, wie in Bezug auf Block 87 beschrieben. Wie im Block 103 angezeigt, kann die Erhöhung um 1% - 200% betragen. Nachdem Schritt 104 den letzten erfolglosen Anfahrversuch oder das Erreichen der maximalen Abweichung festgestellt hat, prüft Schritt 105, ob die Anlage abgeschaltet werden soll. Ist dies der Fall, wird im Schritt 106 ein Alarm ausgelöst und der Räumschiebers 12 bleibt in seiner Position stehen (Block 107). Soll die Anlage dagegen im Betriebszustand bleiben, wird im Schritt 108 ebenfalls ein Alarm ausgelöst, und im Schritt 109 fährt der Räumschiebers 12 unter der Wirkung des Antriebsaggregats 20 zurück in die Startposition, die durch den Endschalter 58 im Antriebsaggregats 20 bestimmt wird.

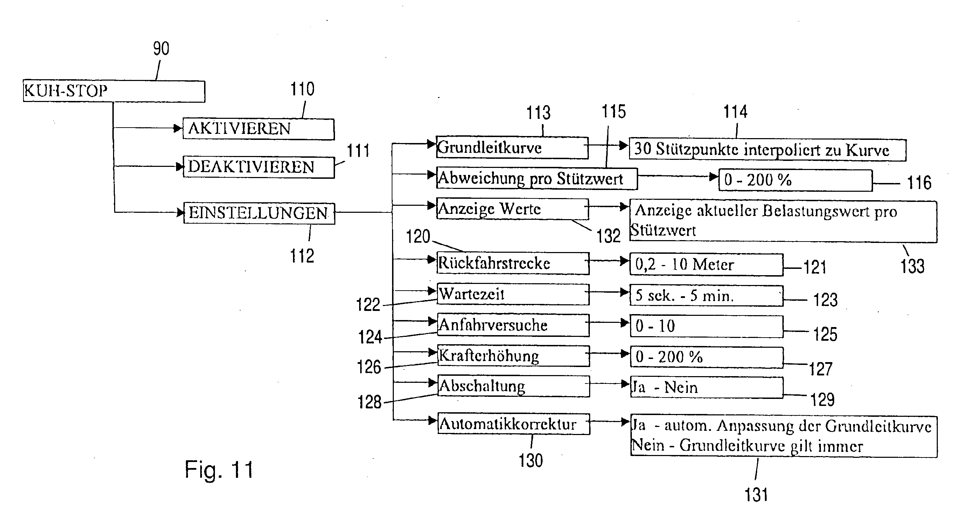

Die Figur 11 zeigt die Einstellungen für die erfindungsgemäße Kuhstoppfunktion 90 in einem Menü, das auf dem nichtdargestellten Display des Computers 71 angezeigt wird. Über Aufruf von Blöcken 110 oder 111 kann die Kuhstoppfunktion aktiviert oder deaktiviert werden. Durch Auswahl des Blockes 112 können die Parameter der Kuhstoppfunktion 90 eingestellt werden. Hierzu gehören die Grundleitkurve 81 über Block 113 mit Wahl der Anzahl von Stützpunkten über Block 114. Des weiteren wird über Block 115 für jeden Stützwert die Abweichung eingestellt, die gemäß Block 116 zwischen 0% und 200% liegen kann. Über den Block 120 wird die Rückfahrstrecke eingestellt, die durchfahren wird, wenn eine Spitzabweichung 91 auftritt, und die gemäß Block 121 zwischen 0,2 m und 10 m liegen kann. Desgleichen wird über Block 122 die Wartezeit bis zum nächsten Räumversuch eingestellt, die gemäß Block 123 zwischen 5 Sekunden und 5 Minuten betragen kann. Über Block 124 wird die Zahl der erneuten Anfahrversuche eingestellt, die gemäß Block 125 zwischen 0 und 10 liegen kann. Über Block 126 kann eine Erhöhung der Räumkraft eingestellt werden. Dies bedeutet, dass beim nächsten Anfahrversuch der Wert für den Spitzabweichung 91 erhöht wird und die Stoppfunktion und die beschriebenen Folgefunktionen erst bei Erreichen des erhöhten Werts für die Spitzenabweichung 91 ausgeführt werden. Gemäß Block 127 kann die Erhöhung zwischen 0% und 200% liegen. Über die Blöcke 128 und 129 wird eingestellt, ob eine Abschaltung des Antriebs für den Räumschieber 12 erfolgen soll. Schließlich wird über den Block 130 die Autokorrektur 86 ausgewählt und über Block 131 wird festgelegt, ob auch die Grundleitkurve automatisch angepasst werden soll oder ob mit der eingestellten Grundleitkurve gearbeitet werden soll. Über einen Block 132 kann eine Anzeige der eingestellten Stützwerte veranlasst werden, und über einen Block 133 kann die aktuelle Belastung für jeden Stützwert zur Anzeige gebracht werden.

Während die Erfindung anhand bevorzugter Ausführungsformen beschrieben wurde, können Abwandlungen dieser Ausführungsformen und andere Ausführungsformen realisiert werden, ohne dass dadurch der Bereich der Erfindung, wie er durch die Ansprüche definiert ist, verlassen wird.

## Patentansprüche

1. Reinigungseinrichtung für Ställe, insbesondere Rinderställe, mit einem Räumschieber (12), der über einen Seilzug (13) entlang eines Kotgangs bewegt wird, und mit wenigstens einem Antrieb (20, 21) für den Seilzug und einer Steuereinrichtung (70) zur Steuerung der Bewegungen des Räumschiebers in Vor- und Rückwärtsrichtung, **gekennzeichnet durch** eine Einrichtung (60) zur Anzeige der Position des Schiebers entlang seiner Bewegungsbahn (22) und **durch** einen Drehmomentsensor (50), der mit dem Antrieb des Seilzugs gekoppelt ist und der zur jeweiligen Position des Räumschiebers das Belastungsdrehmoment feststellt und ein entsprechendes Anzeigesignal an die Steuereinrichtung (70), die einen Computer (71) zur Speicherung einer Drehmomentenkurve (81), mit der die Drehmomentsignale verglichen werden, die während der Bewegung des Räumschiebers erzeugt werden und die momentane Belastung des Seilzugs anzeigen; und eine Steuerung (72), die ein Stillsetzen des Antriebs bewirkt, wenn das Drehmomentsignal einen von der Drehmomentenkurve abweichenden Spitzenwert (91) anzeigt, der einen voreingestellten Schwellwert überschreitet.

2. Einrichtung nach Anspruch 1, **dadurch gekennzeichnet, dass** die Einrichtung zur Positionsanzeige einen Wegsensor (60) umfasst, der den vom Räumschieber (12) zurückgelegten Weg durch induktive Drehwinkelmessung an einem Antriebselement (36) des Seilzugs (13) und durch Umrechnen der gemessenen Drehwinkels in ein Wegmaß bestimmt.

3. Einrichtung nach Anspruch 2, **gekennzeichnet durch** winkelversetzte Bohrungen (62) in einer Seiltrommel (36) des Antriebs, die entlang einer Kreislinie angeordnet sind, und **durch** einen der Seiltrommel in Höhe der Kreislinie benachbarten induktiven Taster (60), der beim Vorbeigang einer Bohrung ein Ausgangssignal erzeugt.

4. Einrichtung nach einem der Ansprüche 1-3, **dadurch gekennzeichnet, dass** ein Antriebsblock (37), der einen Elektromotor (30) und ein Getriebe (31) umfasst, unter der Zugkraft des Seilzugs (13) gegen eine Dämpfungseinrichtung (45) auslenkbar ist und dass das Maß der Auslenkung zur Feststellung des Belastungsdrehmoments dient.

5. Einrichtung nach Anspruch 4, **dadurch gekennzeichnet, dass** der Drehmomentsensor (50) einen magnetinduktiven Linearwegsensor (51, 52) umfasst.

6. Einrichtung nach Anspruch 4 oder 5, **dadurch gekennzeichnet, dass** die Dämpfungseinrichtung eine Feder (45) ist, an der sich der Antriebsblock (37) bei Belastung des Seilzugs abstützt und die mit zunehmender Belastung des Seilzugs eine Auslenkung des Antriebsblocks gestattet, dass mit dem Antriebsblock ein Magnet (52) des magnetinduktiven Linearwegsensor (50) verbunden ist, der mit der Auslenkung des Antriebsblocks (37) am Gehäuse des Linearwegsensors entlang geführt wird, und dass der Linearwegsensor ein Ausgangssignal erzeugt, welches das die momentane Belastung des Seilzugs (13) anzeigt.

7. Einrichtung nach Anspruch 6, **dadurch gekennzeichnet, dass** der Antriebsblock auf einer Achse (32) der Seiltrommel (36) pendelnd gelagert ist und die Feder (45) zusammendrückt, wenn der Seilzug auf die Seiltrommel ein Drehmoment ausübt.

8. Einrichtung nach Anspruch 6 oder 7, **gekennzeichnet durch** eine an einem Rahmen (35) des Antriebs (20, 21) schwenkbar angeordnete Führungsstange (409, auf der eine Druckfeder (45) angeordnet, die sich am Antriebsblock (37) abstützt, und **durch** ein am Antriebsblock befestigtes Traglement (55), das den Magneten (52) des Belastungssensors (50) trägt, so dass sich der Permanentmagnet (52) dicht oberhalb eines Sensorgehäuses (51) befindet und mit der verschwenkung des Antriebsblocks am Sensorgehäuse entlang bewegt wird.

9. Einrichtung nach einem der Ansprüche 1-9, **dadurch gekennzeichnet, daß** die Steurereinrichtung (70) Mittel (97) zur Wiederholung der Räumversuche umfasst, die nach dem Stillsetzen des Antriebs aktiviert werden, und Mittel (102) zur Erhöhung des Schwellwerts für den Spitzenwerts (91) umfasst, die vor einer Wiederholung eines Räumversuches aktiviert werden.

10. Einrichtung nach einem der Ansprüche 1-9, **gekennzeichnet durch** einen Sicherheitsendschalter (58), der bei Überlastung der Seiltrommel **durch** den beweglich gelagerten Antriebsblock (37) betätigt wird.

11. Einrichtung nach Anspruch 1, **dadurch gekennzeichnet, dass** die Einrichtung zur Positionsanzeige einen zeitmesser umfasst, der zum Messen der Zeit dient, in welcher der Räumschieber (12) durch den Antrieb (21 oder 20) bewegt wird, und der den jeweiligen Zeitwert als Position des Räumschiebers festlegt.

12. Verfahren zur Reinigung von Ställen, insbesondere Rinderställen, mit einem Räumschieber (12), der über einen Seilzug (13) entlang eines Kotgangs bewegt wird, und mit wenigstens einem Antrieb (20, 21) des Seilzugs und einer Steuereinrichtung (70) zur Steuerung der Bewegungen des Räumschiebers in Vor- und Rückwärtsrichtung, **gekennzeichnet durch** die Schritte:
(a) Feststellen und Anzeigen der Position des Räumschiebers entlang seiner Bewegungsbahn;
(b) Messung des Belastungsdrehmoments in Vor- und Rückwärtsrichtung an einer Aufwickeltrommel (36) des Seilzugs (13) während der Bewegung des Räumschiebers entlang seiner Bewegungsbahn (22) und Erzeugung von Signalen, die das an der Aufwickeltrommel jeweils wirksame Drehmoment anzeigen;
(c) Erzeugung und Speicherung einer Drehmomentenkurve (81) über die Bewegungsbahn des Räumschiebers in Abhängigkeit vom Dungvolumen, das mit dem zurückgelegten Weg ansteigt;
(d) vergleich der während der Bewegung des Räumschiebers entlang seiner Bewegungsbahn gemessenen Drehmoment-Anzeigesignale mit der gespeicherten Drehmomentenkurve; und
(e) Unterbrechen der Bewegung des Räumschiebers, wenn der Vergleich einen Anstieg (91) des Drehmoments über den Verlauf der Drehmomentenkurve (81) anzeigt, der einen voreingestellten Schwellwert überschreitet.

13. Verfahren nach Anspruch 12, **gekennzeichnet dadurch, dass** der Schritt (a) die Schritte umfasst:
Messen des vom Räumschieber zurückgelegten Weges durch induktive Drehwinkelmessung (60) am Antrieb (21 oder 20) des Seilzugs und Umrechnen der gemessenen Drehwinkels in ein Wegmaß; und Speichern des Wegmaßes als Position des Räumschiebers.

14. Verfahren nach Anspruch 12 oder 13, **gekennzeichnet dadurch, dass** zur Messung des Drehmoments in Schritt (b) ein Antriebsblock (37) durch die Zugkraft des Seilzugs (13) gegen eine Dämpfungseinrichtung (45) ausgelenkt wird und dass das Belastungsdrehmoment aus dem Maß der Auslenkung ermittelt wird.

15. Verfahren nach Anspruch 13, **gekennzeichnet dadurch, dass** die Messung des Drehmoments in Schritt (b) durch einen magnetinduktiven Linearwegsensor (50) erfolgt.

16. Verfahren nach einem der Ansprüche 12-15, **gekennzeichnet dadurch, dass** der Schritt (c) die Schritte umfasst:
Unterteilung der Bewegungsbahn (22) des Räumschiebers (13) in Stützpunkte, die vom Räumschieber angefahren werden; Messen und Speichern des Belastungsdrehmoments an jedem der Stützpunkte; und
Erzeugen der Drehmomentenkurve (81) durch Interpolation der Bereiche zwischen des Stützpunkten.

17. Verfahren nach einem der Ansprüche 12-16, **gekennzeichnet durch** die Schritte
Festlegen und Speichern von Korrekturwerten der Drehmomentenkurve (81) und Ersetzen der gemessenen Werte **durch** Korrekturwerte.

18. Verfahren nach einem der Ansprüche 12-17, **gekennzeichnet durch** den Schritt (86) einer wahlweisen Erhöhung der gespeicherten Drehmomentenkurve in Abhängigkeit von Variablen, die insbesondere die Stallbelegung oder die Außentemperatur angeben.

19. Verfahren nach einem der Ansprüche 12-18, weiter **gekennzeichnet durch** Schritte, die im Anschluß an Schritt
(e) ausgeführt werden:
(f) Zurückfahren Räumschiebers um eine voreinstellbare Wegstrecke, wenn eine Unterbrechung eingetreten ist;
(g) Stillstand des Räumschiebers für eine voreinstellbare Zeitspanne; und
(h) erneutes Anfahren des Räumschiebers.

20. Verfahren nach Anspruch 19, **gekennzeichnet durch** die Schritte:
einmaliges oder mehrmaliges Wiederholen der Schritte (f)-(h); Zählen der Wiederholungen und Erzeugen eines Alarmsignals, wenn ein voreinstellbarer Grenzwert für die Anzahl der Wiederholungen erreicht ist.

21. Verfahren nach Anspruch 17 oder 18, **gekennzeichnet durch** den Schritt:
nach jeder Wiederholung der Schritte (f)-(h) Erhöhen des voreingestellten Schwellwerts bis zu einem voreinstellbaren Grenzwert.

22. Verfahren nach Anspruch 12, **gekennzeichnet dadurch, dass** der Schritt (a) die Schritte umfasst:
Messen der Zeit, während der der Räumschieber durch den Antrieb (21 oder 20) bewegt wird; und Speichern des jeweiligen Zeitwertes als Position des Räumschiebers.
